# EUROPEAN PATENT SPECIFICATION

(11) **EP 3 962 634 B1**
(45) Date of publication and mention of the grant of the patent: **06.09.2023**
(21) Application number: 20754838.9
(22) Date of filing: 02.05.2020
(51) Int. Cl.: B01F 23/451, B01F 25/00, B01F 25/314, C02F 1/72

(54) **MIXING DEVICE FOR MIXING HYDROGEN PEROXIDE AND WATER**
MISCHVORRICHTUNG ZUM MISCHEN VON WASSERSTOFFPEROXID UND WASSER
DISPOSITIF DE MÉLANGE POUR MÉLANGER DU PEROXYDE D'HYDROGÈNE ET DE L'EAU

(30) Priority: 02.05.2019 NL 2023054
(43) Date of publication of application: 09.03.2022
(73) Proprietor: Water IQ International B.V., 5626 DC Eindhoven (NL)
(72) Inventor: DEKKERS, Freddy, 5674 XC Nuenen (NL)
(74) Representative: Verhees, Godefridus Josephus Maria
(86) International application number: PCT/NL2020/050280
(87) International publication number: WO 2020/222651

(56) References cited:
- EP-A1- 2 698 352
- EP-A2- 0 901 810
- DE-U1- 20 211 699
- GB-A- 2 389 543
- US-A- 3 489 162
- US-A- 5 173 007
- US-A1- 2008 049 548
- US-A1- 2010 229 757

## Description

### Technical field of the invention

The invention relates to mixing device for mixing hydrogen peroxide and water, comprising:
- a mixing chamber provided with a water supply opening and a drain opening for draining the mixture of hydrogen peroxide and water,
- two connecting pieces defining the supply opening and the drain opening, which connecting pieces are opposite each other and are in line with each other,
- wherein the cross section of the mixing chamber at the location of the water supply opening being larger than the cross section of the water supply opening so that the water leaving the water supply opening and entering the mixing chamber creates a turbulence in the water flow, and
- wherein at the water supply opening there is at least one nozzle for injecting hydrogen peroxide into the water flow, which nozzle is directed to the water flow entering the mixing chamber.

### Background of the invention

Hydrogen peroxide (H₂O₂) is mixed with water for example to form hydrogen radicals to insure disinfection or purification of process water by oxidation. A mixing device according to the preamble of claim 1 is known from DE 202 11 699 U.

### Summary of the invention

It is an object of the present invention to provide a mixing device in which the hydrogen peroxide can be mixed with water in a faster and better way. To this end the mixing device according to the invention is characterized in that it further comprises a bend piece being inside the mixing chamber, a first end of the bend piece being connected to one of the connecting pieces and the other end of the bend piece defining the water supply opening, that is at right angles to the drain opening, such that the direction of the water flow entering the mixing chamber and the direction of the flow of the mixture leaving the mixing chamber are at right angles to each other. Due to this configuration the water flow is not smooth and the turbulence increases which is in favor of a good mixing. Hydrogen peroxide and water can be mixed faster in a turbulent flow than in a laminar flow. Preferably the hydrogen peroxide is injected in liquid form in the turbulent water flow.

Preferably, the mixing device comprises a closing body and means for moving the closing body between a closed position closing the water supply opening and an open position. The means for mixing the hydrogen peroxide and water can easily be integrated in an open-close valve.

To improve the mixing of the hydrogen peroxide and water, the nozzle is directed perpendicular to the direction of the water flow entering the mixing chamber. The water supply opening is preferably circular and the nozzle is preferably directed radial with respect to the water supply opening.

A better mixing will be realized in case the mixing device comprises a further nozzle, said nozzles being directly opposite each other (diametrically opposed to each other). Yet an even better mixing will be realized in case the mixing device comprises three further nozzles, two of said nozzles being directly opposite each other and the other two nozzles also being directly opposite each other and perpendicular to the other two nozzles.

### Brief description of the drawings

The invention will be further elucidated below on the basis of drawings. These drawings show an embodiment of the mixing device according to the present invention. In the drawings:

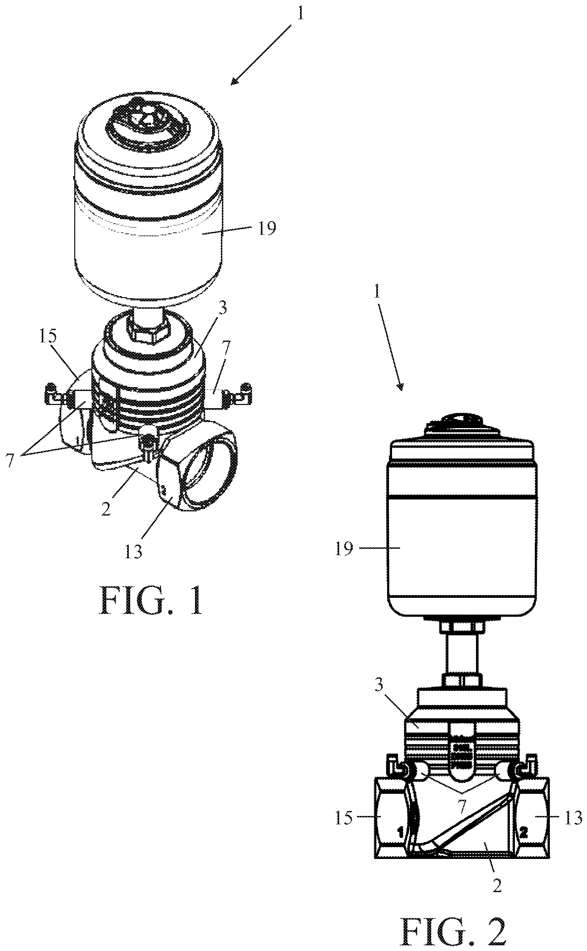

Figure 1 shows the mixing device in perspective view;
Figure 2 shows the mixing device in side view;
Figure 3 shows the mixing device in top view;
Figure 4 shows the mixing in cross section along lines A-A in Fig. 3;
Figure 4B is an enlarged detail of a nozzle shown in cross section of Fig. 4; and
Figure 5 shows the mixing in cross section along lines B-B in Fig. 3.

### Detailed description of the drawings

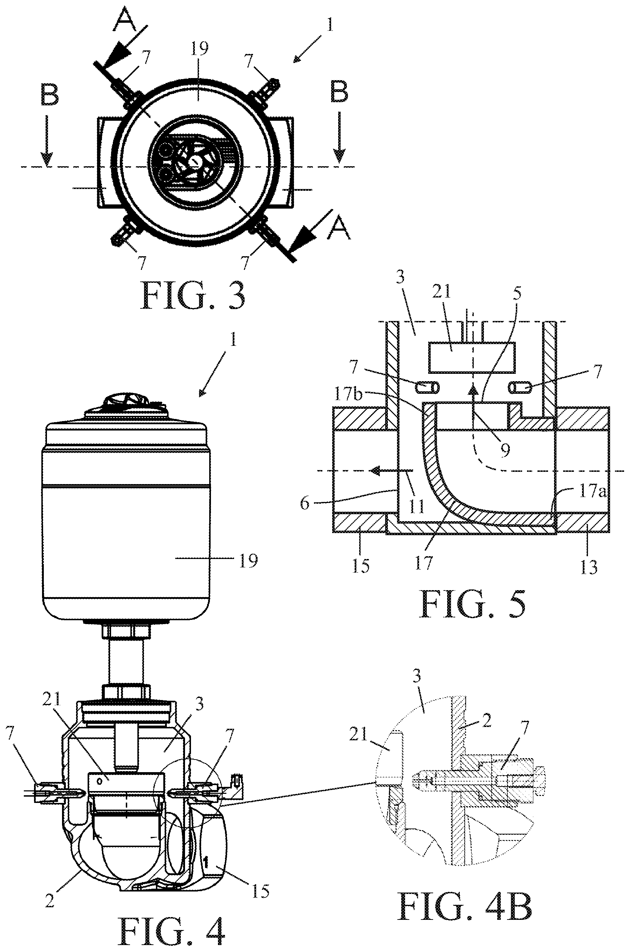

In the Figures an embodiment of the mixing device according to the invention is shown in different views and sectional views. The mixing device 1 is a modified open-close valve for application in a pipe. Said valve comprises means 19 for moving a closing body 21 between a closed position (see figure 4) and an open position (see figure 5). These means 19 can be any kind of known means to move a closing body.

The mixing device 1 comprises a mixing chamber 3 with a water supply opening 5 and an drain opening 6 for draining the mixture of hydrogen peroxide and water. The cross section of the mixing chamber 3 at the location of the water supply opening 5 is larger than the cross section of the water supply opening 5 so that the water leaving the water supply opening 5 and entering the mixing chamber 3 creates a turbulence in the water flow.

At or near the water supply opening 5 there are four nozzles 7 for injecting liquid hydrogen peroxide into the water flow. These nozzles are directed perpendicular to the direction 9 of the water flow entering the mixing chamber 3. The water supply opening 5 is circular and the nozzles 7 are directed radial with respect to the water supply opening 5. The nozzles 7 are at an angle of 90 degrees to each other.

The cross section of the water supply opening 5 and the cross section of the drain opening 6 are at right angles to each other such that the direction 9 of the water flow entering the mixing chamber 3 and the direction 11 of the flow of the mixture leaving the mixing chamber 3 are at right angles to each other.

The mixing device 1 comprises a first connecting piece 13 for connecting a water supply pipe to the mixing device and a second connecting piece 15 for connecting a mixture drain pipe. Inside the mixing chamber 3 a 90 degree bend piece 17 is connected to the first connecting piece 13.

The bend piece 17 is inside the mixing chamber 3. A first end 17a of the bend piece 17 is connected to the first connecting piece 13 and the other end 17b of the bend piece 17 defines the water supply opening 5. This water supply opening (or the cross section of the water supply opening 5) is at right angles to (the cross section of) the drain opening 6, such that the direction 9 of the water flow entering the mixing chamber 3 and the direction 11 of the flow of the mixture leaving the mixing chamber 3 are at right angles or nearly at right angles to each other.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Mixing device (1) for mixing hydrogen peroxide and water, comprising:
- a mixing chamber (3) provided with a water supply opening (5) and a drain opening (6) for draining the mixture of hydrogen peroxide and water,
- two connecting pieces (13, 15) defining the supply opening (5) and the drain opening (6), which connecting pieces (13, 15) are opposite each other and are in line with each other,
- wherein the cross section of the mixing chamber (3) at the location of the water supply opening (5) being larger than the cross section of the water supply opening (5) so that the water leaving the water supply opening (5) and entering the mixing chamber (3) creates a turbulence in the water flow, and
- wherein at the water supply opening (5) there is at least one nozzle (7) for injecting hydrogen peroxide into the water flow, which nozzle is directed to the water flow entering the mixing chamber (3),
**characterized in** the mixing device (1) further comprises a bend piece (17) being inside the mixing chamber (3), a first end (17a) of the bend piece being connected to one of the connecting pieces (13) and the other end (17b) of the bend piece defining the water supply opening (5), that is at right angles to the drain opening (6), such that the direction (9) of the water flow entering the mixing chamber (3) and the direction (11) of the flow of the mixture leaving the mixing chamber (3) are at right angles to each other.

2. Mixing device according to claim 1, **characterized in that** the mixing device (1) comprises a closing body (21) and means (19) for moving the closing body (21) between a closed position closing the water supply opening (5) and an open position.

3. Mixing device according to claim 1 or 2, **characterized in that** the nozzle (7) is directed perpendicular to the direction (9) of the water flow entering the mixing chamber (3).

4. Mixing device according to claim 1, 2 or 3, **characterized in that** the water supply opening (5) is circular and the nozzle (7) is directed radial with respect to the water supply opening (5).

5. Mixing device according to claim 1, 2, 3 or 4, **characterized in that** the mixing device (1) comprises a further nozzle, said nozzles (7) being directly opposite each other.

6. Mixing device according to claim 1, 2, 3 or 4, **characterized in that** the mixing device (1) comprises three further nozzles (7), two of said nozzles being directly opposite each other and the other two nozzles also being directly opposite each other and perpendicular to the other two nozzles.

## Patentansprüche

1. Mischvorrichtung (1) zum Mischen von Wasserstoffperoxid und Wasser, umfassend:
- eine Mischkammer (3), die mit einer Wasserzufuhröffnung (5) und einer Ablauföffnung (6) zum Ablassen des Gemisches aus Wasserstoffperoxid und Wasser versehen ist,
- zwei die Zulauföffnung (5) und die Ablauföffnung (6) begrenzende Anschlussstücke (13, 15), die einander gegenüberliegen und miteinander fluchten,
- wobei der Querschnitt der Mischkammer (3) an der Stelle der Wasserzufuhröffnung (5) größer ist als der Querschnitt der Wasserzufuhröffnung (5), so dass das aus der Wasserzufuhröffnung (5) austretende und in die Mischkammer (3) eintretende Wasser eine Turbulenz im Wasserstrom erzeugt, und
- wobei an der Wasserzufuhröffnung (5) mindestens eine Düse (7) zum Einspritzen von Wasserstoffperoxid in den Wasserstrom vorhanden ist, die auf den in die Mischkammer (3) eintretenden Wasserstrom gerichtet ist,
**dadurch gekennzeichnet, dass** die Mischvorrichtung (1) außerdem ein gebogenes Stück (17) umfasst, das sich innerhalb der Mischkammer (3) befindet, wobei ein erstes Ende (17a) des gebogenen Stücks mit einem der Verbindungsstücke (13) verbunden ist und das andere Ende (17b) des gebogenen Stücks die Wasserzufuhröffnung (5) definiert, das heißt im rechten Winkel zur Ablauföffnung (6), sodass die Richtung (9) des in die Mischkammer (3) eintretenden Wasserstroms und die Richtung (11) des Flusses der Mischung, die die Mischkammer (3) verlässt, im rechten Winkel zueinander sind.

2. Mischvorrichtung nach Anspruch 1, **dadurch gekennzeichnet, dass** die Mischvorrichtung (1) einen Schließkörper (21) und Mittel (19) zum Bewegen des Schließkörpers (21) zwischen einer die Wasserzufuhröffnung (5) verschließenden Schließstellung und einer Offenstellung umfasst.

3. Mischvorrichtung nach Anspruch 1 oder 2, **dadurch gekennzeichnet, dass** die Düse (7) senkrecht zur Richtung (9) des in die Mischkammer (3) eintretenden Wasserstroms gerichtet ist.

4. Mischvorrichtung nach Anspruch 1, 2 oder 3, **dadurch gekennzeichnet, dass** die Wasserzufuhröffnung (5) kreisförmig ist und die Düse (7) radial zur Wasserzufuhröffnung (5) gerichtet ist.

5. Mischvorrichtung nach Anspruch 1, 2, 3 oder 4, **dadurch gekennzeichnet, dass** die Mischvorrichtung (1) eine weitere Düse umfasst, wobei sich die Düsen (7) direkt gegenüberliegen.

6. Mischvorrichtung nach Anspruch 1, 2, 3 oder 4, **dadurch gekennzeichnet, dass** die Mischvorrichtung (1) drei weitere Düsen (7) umfasst, wobei zwei dieser Düsen einander direkt gegenüberliegen und die anderen beiden Düsen ebenfalls einander direkt gegenüberliegen und senkrecht zu den beiden anderen Düsen stehen.

## Revendications

1. Dispositif mélangeur (1) pour mélanger du peroxyde d'hydrogène et de l'eau, comprenant :
- une chambre de mélange (3) munie d'une ouverture d'alimentation en eau (5) et d'une ouverture de vidange (6) pour vidanger le mélange de peroxyde d'hydrogène et d'eau,
- deux pièces de raccordement (13, 15) délimitant l'orifice d'alimentation (5) et l'orifice de vidange (6), lesquelles pièces de raccordement (13, 15) se font face et sont dans le prolongement l'une de l'autre,
- dans lequel la section transversale de la chambre de mélange (3) à l'emplacement de l'ouverture d'alimentation en eau (5) est plus grande que la section transversale de l'ouverture d'alimentation en eau (5) de sorte que l'eau quittant l'ouverture d'alimentation en eau (5) et entrant dans la chambre de mélange (3) crée une turbulence dans le flux d'eau, et
- dans lequel au niveau de l'ouverture d'alimentation en eau (5) se trouve au moins une buse (7) pour injecter du peroxyde d'hydrogène dans le flux d'eau, laquelle buse est dirigée vers le flux d'eau entrant dans la chambre de mélange (3),
**caractérisé en ce que** le dispositif mélangeur (1) comprend en outre une pièce coudée (17) se trouvant à l'intérieur de la chambre de mélange (3), une première extrémité (17a) de la pièce coudée étant reliée à l'une des pièces de raccordement (13) et l'autre extrémité (17b) de la pièce coudée définissant l'ouverture d'alimentation en eau (5), c'est-à-dire perpendiculairement à l'ouverture de vidange (6), de sorte que la direction (9) de l'écoulement de l'eau entrant dans la chambre de mélange (3) et la direction (11) de l'écoulement du mélange sortant de la chambre de mélange (3 ) sont perpendiculaires l'un à l'autre.

2. Dispositif mélangeur selon la revendication 1, **caractérisé en ce que** le dispositif mélangeur (1) comprend un corps de fermeture (21) et des moyens (19) pour déplacer le corps de fermeture (21) entre une position fermée fermant l'orifice d'alimentation en eau (5) et une position ouverte.

3. Dispositif mélangeur selon la revendication 1 ou 2, **caractérisé en ce que** la buse (7) est dirigée perpendiculairement à la direction (9) du flux d'eau entrant dans la chambre de mélange (3).

4. Dispositif mélangeur selon la revendication 1, 2 ou 3, **caractérisé en ce que** l'orifice d'alimentation en eau (5) est circulaire et la buse (7) est dirigée radialement par rapport à l'orifice d'alimentation en eau (5).

5. Dispositif mélangeur selon la revendication 1, 2, 3 ou 4, **caractérisé en ce que** le dispositif mélangeur (1) comprend une autre buse, lesdites buses (7) étant directement opposées l'une à l'autre.

6. Dispositif mélangeur selon la revendication 1, 2, 3 ou 4, **caractérisé en ce que** le dispositif mélangeur (1) comprend trois autres buses (7), deux desdites buses étant directement opposées l'une à l'autre et les deux autres buses étant également directement opposées l'une à l'autre et perpendiculaires aux deux autres buses.
